# EUROPÄISCHE PATENTSCHRIFT

(11) **EP 0 541 027 B1**
(45) Veröffentlichungstag und Bekanntmachung des Hinweises auf die Patenterteilung: **31.07.1996**
(21) Anmeldenummer: 92118727.4
(22) Anmeldetag: 02.11.1992
(51) Int. Cl.: B32B 31/20, B29C 59/04, B32B 31/00

(54) **Vorrichtung und Verfahren zum Herstellen eines mehrschichtigen Folienverbundes**
Method and apparatus for producing a multi-layer laminate
Dispositif et procédé pour produire un stratifié multicouche

(30) Priorität: 07.11.1991 DE 4136706
(43) Veröffentlichungstag der Anmeldung: 12.05.1993
(73) Patentinhaber: HOECHST AKTIENGESELLSCHAFT, 65926 Frankfurt am Main (DE)
(72) Erfinder: Rohleder, Sabine, DI. Dipl.-Ing., W-6108 Weiterstadt (DE); Coutandin, Jochen, Dr. Dipl.-Phys., W-6536 Langenlonsheim (DE); Hoppe, Burkhard, DI. Dipl.-Ing., W-6204 Taunusstein (DE)

(56) Entgegenhaltungen:
- EP-A- 0 212 232
- EP-A- 0 363 794
- EP-A- 0 485 896
- EP-A- 0 495 646
- AU-B- 527 905
- DE-A- 3 020 008
- DE-A- 4 004 793
- FR-A- 1 441 508
- FR-A- 2 167 876
- GB-A- 1 220 080
- GB-A- 2 127 344
- US-E- 27 992

## Beschreibung

Die Erfindung betrifft eine Vorrichtung zum Herstellen einer Anzahl von zwei- oder mehrlagigen Einzelverbunden aus miteinander gesiegelten Kunststoffolienbändern, mit einer Anzahl von Vorratsrollen, auf denen die Kunststoffolienbänder aufgewickelt sind, sowie ein Verfahren zum Herstellen einer Anzahl von zwei- oder mehrlagigen Einzelverbunden aus biaxial und/oder monoaxial und/oder unverstreckten thermoplastischen Kunststoffolien, die zumindest einseitig mit einer Siegelschicht koextrudiert sind, durch Siegeln unter Druck- und Wärmeanwendung.

Seitens verschiedener Branchen, wie z. B. dem Apparatebau, dem Fahrzeug- und Flugzeugbau oder der Sicherheitstechnik, besteht ein zumnehmend verstärktes Interesse an hochfesten Folienverbunden und Verbundkörpern sowohl in Form von Bändern als auch von Halbzeugen, wie z.B. Platten, als auch Fertigbauteilen. Dieser Entwicklung folgend werden von Plattenherstellern Techniken zur Fertigung mechanisch höher belastbarer Produkte erarbeitet. Parallel zur Modifizierung der für die Plattenproduktion vorgesehenen Polymerwerkstoffe durch den Einbau von Verstärkungsmaterialien, wie z.B. Textil-, Glas- oder Kohlenstoffasern, werden Techniken zur Herstellung eigenverfestigter Platten durch Orientierungsmaßnahmen entwickelt. Lösungen im Rahmen dieser Techniken stellen z.B. das Walzpreßrecken oder das in der EP-A 0 207 047 beschriebene Verfahren dar, dessen wesentliche Verfahrensmaßnahme darin besteht, eine Vielzahl biaxial verstreckter, mit dünnen, koextrudierten Siegelschichten ausgerüsteter Folien zu einer beliebig dicken, homogenen Platte unter Anwendung von Druck und Wärme zu verpressen. Hierzu wird im allgemeinen der zwischen zwei Preßbleche eingelegte Folienstapel in diskontinuierlich arbeitende, hydraulische Plattenpressen in Einfach- oder Etagenbauweise eingebracht. Der Preßvorgang wird durch Verfahrensparameter, wie Druck, Temperatur und Zeit, bestimmt. Insbesondere der letzte Verfahrensparameter steht, vor allem im Falle der Durchwärmung sehr dicker Platten, einer kostengünstigen Herstellung von Verbundlaminaten entgegen. Kontinuierliche Durchlaufpressen, insbesondere Doppelbandpressen, stellen diesbezüglich eine praktikable, zeitsparende Lösung dar, sind aber hinsichtlich der auf ihnen zu realisierenden Geschwindigkeiten nur begrenzt einsetzbar.

Aus der GB-A - 1.220.080 ist eine Vorrichtung zum Herstellen eines mehrschichtigen Folienverbundes aus miteinander gesiegelten Kunststoffolien der eingangs beschriebenen Art bekannt. Diese Vorrichtung umfaßt eine temperierbare Walze, die ein Siegelwerkzeug bildet und deren Umfangsfläche zum Siegeln der Kunststoffolienbänder dient. Entlang der Umfangsfläche der Walze sind in gleichgroßen oder unterschiedlichen Abständen zueinander nicht beheizte Druckwalzen angeordnet, die an der Umfangsfläche der Walze anliegen. Jedes Kunststoffolienband, das von einer Vorratsrolle über die zugeordnete Druckwalze geführt ist, durchläuft die Kontaktfläche zwischen der Druckwalze und der Walze. Die in Abständen voneinander auf die Umfangsfläche der Walze auflaufenden Kunststoffolienbänder sind unter Druck- und Wärmeanwendung auf die übereinandergeschichtet transportierten Kunststoffolienbänder durch die Druckwalzen miteinander siegelbar. Eine Auftrennung des Folienverbundes in mehrere Einzelverbunde findet nicht statt.

In der DE-A - 40 04 793 ist ein Verfahren zur Herstellung von verstärkten Bändern und Platten aus Gummi oder dergleichen beschrieben. Um in einfacher Weise aus einem vulkanisierten Körper zwei oder mehrere Bänder bzw. Platten herstellen zu können, wird zwischen den für die einzelnen Bänder oder Platten vorgesehenen Teilen des Rohlings eine Gewebelage angeordnet, die keine Bindung mit diesen Teilen eingeht und ein Zerreißen des fertig vulkanisierten Rohlings und eine Zerlegung in die einzelnen Bänder und Platten ermöglicht. Der Rohling ist ein aus mehreren Lagen gebildeter Schichtkörper, der aus zwei je für sich wiederum als Schichtkörper ausgeführten Teilen besteht, zwischen denen die Gewebelage angeordnet ist. Der Rohling wird zwischen ebenen Preßplatten verpreßt und vulkanisiert. Nach Beendigung der Vulkanisation wird der fertig vulkanisierte Rohling aufgetrennt, indem der obere Teil von der Gewebelage und diese von dem unteren Teil abgezogen wird.

Aus der EP-A 0 485 896 sind eine Vorrichtung und ein Verfahren zur Herstellung eines mehrschichtigen Folienverbundes bekannt. Bei der Vorrichtung dient eine temperierbare Walze als ein Siegelwerkzeug, auf dessen Umfangsfläche eine Anzahl von Kunststoffolienbändern unter Druck- und Wärmeanwendung miteinander gesiegelt werden. Die Kunststoffolienbänder laufen in gleichgroßen oder unterschiedlichen Abständen zueinander auf die Umfangsfläche der Walze auf und werden über Druckwalzen geführt. Diese Druckwalzen liegen unter Druck auf der Umfangsfläche der Walze auf. Die Kunststoffolienbänder sind ein- oder beidseitig mit Siegelschichten koextrudiert, die durch Wärmeeinwirkung angeschmolzen werden, so daß es zu einer Siegelung der übereinandergeschichteten Kunststoffolienbänder auf der Umfangsfläche der Walze kommt, sobald die Kunststoffolienbänder die Kontakflächen zwischen den Druckwalzen und der Walze durchlaufen. Eine Auftrennung des mehrschichtigen Folienverbundes findet nicht statt.

In der DE-PS 35 30 309 sind ein Verfahren und eine Vorrichtung zum kontinuierlichen Herstellen von thermoplastischen Kunststoffbahnen, insbesondere für die Weiterverarbeitung zu Platten oder Folien, beschrieben, aus mindestens einer extrudierten, auf Verarbeitungstemperatur erwärmten Thermoplastbahn, die in erwärmtem Zustand zwischen zwei ortsfest angeordneten druckbeaufschlagten Platten abgekühlt wird, wobei die Oberfläche der Thermoplastbahn kalibriert und geglättet wird. Die Abkühlung der Thermoplastbahn wird unter Einwirkung von Flächendruck vorgenommen, wozu sie während der Abkühlung zwischen zwei kontinuierlich bewegten, endlos umlaufenden Preßbändern geführt wird. Dabei wird ein gleichmäßiger Flächendruck von den Platten hydraulich oder mechanisch auf die Innenseiten der sich bewegenden Preßbänder ausgeübt und von diesen auf die Thermoplastbahn übertragen. Die Platten werden auf eine niedrigere Temperatur als die Endtemperatur der Thermoplastbahn gehalten, um so ein Temperaturgefälle zwischen Thermoplastbahn, Preßband und Platte aufrechtzuerhalten. Die Abkühlung der Thermoplastbahn erfolgt, indem Wärme aus der Bahn über das Preßband auf die Platten mittels Wärmeleitung abgeführt wird. Der Flächendruck wirkt während der gesamten Dauer der Abkühlung der Thermoplastbahn zwischen den Preßbändern ein.

Aufgabe der Erfindung ist es, eine Vorrichtung der eingangs beschriebenen Art so weiterzuentwickeln, daß in einem Arbeitsgang eine Anzahl von zwei- oder mehrlagigen Einzelverbunden kontinuierlich und kostensparend mit hoher Geschwindigkeit aus heißsiegelfähigen Kunststoffolien mit, gegenüber extrudierten Folien gleicher Dicke wie die Einzelverbunde, verbesserten mechanischen Eigeschaften und zumindest gleichbleibenden optischen Eigenschaften der Einzelverbunde gegenüber der einzelnen Kunststoffolie gefertigt werden können.

Diese Aufgabe löst eine Vorrichtung zum Herstellen einer Anzahl von zwei- oder mehrlagigen Einzelverbunden aus miteinander gesiegelten Kunststoffolienbändern, mit einer Anzahl von Vorratsrollen, auf denen die Kunststoffolienbänder aufgewickelt sind, mit einer beheizbaren Walze als Siegelwerkzeug, entlang dessen Umfangsfläche in gleichgroßen oder unterschiedlichen Abständen zueinander, beheizte Druckwalzen anliegen, wobei jedes Kunststoffolienband von der Vorratsrolle über die zugeordnete Druckwalze zuführbar ist und die Kontaktfläche zwischen Druckwalze und Walze durchläuft, so daß die in Abständen voneinander auf die Umfangsfläche der Walze auflaufenden Kunststoffolienbänder unter Druck- und Wärmeanwendung auf die übereinandergeschichtet transportierten Kunststoffolienbänder durch die Druckwalzen miteinander zu einem Folienverbund siegelbar sind, wobei zumindest zwischen zwei Kunststoffolienbändern keine Siegelschicht(en) vorhanden ist (sind), und der Folienverbund durch eine Kühleinrichtung hindurch auf eine Trennwalze aufläuft und entlang eines Teilumfangs der Trennwalze in Einzelverbunde auftrennbar ist.

Die Weiterbildung der Vorrichtung nach der Erfindung ergibt sich aus den Merkmalen der Patentansprüche 2 bis 12.

Bei dem Verfahren zum Herstellen einer Anzahl von zwei- oder mehrlagigen Einzelverbunden aus biaxial und/oder monoaxial und/oder unverstreckten thermoplastischen Kunststoffolien, die zumindest einseitig mit einer Siegelschicht koextrudiert sind, unter Verwendung der Vorrichtung nach Anspruch 1, wird durch kontinuierliches, additives Aufsiegeln einzelner bewegter Kunststoffolienbändern auf ein bewegtes erstes Kunststoffolienband unter Druck- und Wärmeanwendung ein Folienverbund vorgegebener Enddicke erhalten, wobei die Kunststoffolienbänder getrennt und im Abstand voneinander einer beheizbaren Walzenfläche zugeführt und entlang dieser Fläche so aufeinander aufgebracht und gesiegelt werden, daß zumindest zwischen zwei aufeinanderliegenden Kunststoffolienbändern keine Siegelschicht(en) vorhanden ist (sind) und daß der Folienverbund nach dem Siegeln gekühlt und entlang der nicht miteinander gesiegelten Kunststoffolienbänder in Einzelverbunde aufgetrennt wird.

Die weiteren Verfahrensmaßnahmen ergeben sich aus den Merkmalen der Patentansprüche 14 bis 24.

Der Dickenaufbau eines Folienverbundes in Bandform durch kontinuierliches, additives Auflaminieren einzelner Kunststoffolienbänder wird erreicht, indem die Heißsiegelschichten der Kunststoffolienbänder unmittelbar vor dem Zusammenführen der Bänder kurzzeitig angeschmolzen und mittels Liniendruck verpreßt werden. Gegenüber dem zeitaufwendigen, herkömmlichen Verpressen eines kompakten Folienstapels in Plattenpresen bzw. dem Auslösen des für eine homogene Verbindung notwendigen thermischen Folienschrumpfes im Falle einer Rohrfertigung, ergeben sich bei der Erfindung die Vorteile, daß der Aufheiz- und Anschmelzvorgang der nur wenige µm dicken Siegelschichten der Kunststoffolienbänder in extrem kurzer Zeit und damit auch unter weitgehender Vermeidung einer thermischen Schädigung des Kunststoffmaterials durchgeführt werden kann, daß bei dem kontinuierlichen Verfahren relativ hohe Geschwindigkeiten erreichbar sind und daß die durch Auftrennen des Folienverbundes erhaltenen Einzelverbunde als Rollenware problemlos weiterverarbeitet werden können. Im Gegensatz zum Pressen eines kompakten Folienstapels, in dem jede Folienlage ein anderes Temperaturprofil hat, erfolgt das Verpressen bei der Erfindung unter stets konstanten, schonenden Konditionen für jedes der einzelnen Kunststoffolienbänder. Im Vergleich zu dem Verpressen eines Folienstapels zu einem Einzelverbund mittels einer Doppelbandpresse ergeben sich niedrigere Investitionskosten, eine höhere Verarbeitungsgeschwindigkeit und eine Vereinfachung der Variationsmöglichkeiten zur Strukturierung, Kalibrierung und der Weiterverarbeitung der Oberflächen der Einzelverbunde. Durch das Auftrennen des Folienverbundes in zwei- oder mehrlagige Einzelverbunde an den nicht miteinander gesiegelten Kunststoffolienbändern werden gleichzeitig, d.h. in einem Arbeitsgang, mehrere Einzelverbunde zeit- und kostensparend gefertigt.

Die Erfindung wird im folgenden anhand der Zeichnungen näher erläutert. Es zeigen:
- Figur 1: eine schematische Ansicht einer ersten Ausführungsform der Vorrichtung nach der Erfindung,
- Figur 2: eine schematische Ansicht einer zweiten Ausführungsform der Vorrichtung, mit einer anderen Kühlanordnung als die Ausführungsform nach Figur 1,
- Figur 3: als Detail einer dritten Ausführungsform der Vorrichtung in schematischer Darstellung eine Walzenanordnung zum Dehnen eines Einzelverbundes,
- Figur 4: einen Schnitt durch einen 6-lagigen Folienverbund, der in drei 2-lagiger Einzelverbunde auftrennbar ist,
- Figur 5: einen Schnitt durch einen 7-lagigen Folienverbund, der in zwei 2-lagige und einen 3-lagigen Einzelverbund auftrennbar ist,
- Figur 6a: als Detail einer vierten Ausführungsform der Vorrichtung eine Prägestation, zwischen deren Walzen ein Einzelverbund hindurchläuft und geprägt wird,
- Figur 6b: eine gegenüber der Ausführungsform nach Figur 6a leicht abgewandelte Prägestation, bei der der Einzelverbund über Führungswalzen geführt ist und von diesen geprägt wird, und
- Figur 7: eine fünfte Ausführungsform der Vorrichtung, bei welcher der Folienverbund in Planlage eine Kühlanordnung durchläuft, bevor er in Einzelverbunde aufgetrennt wird.

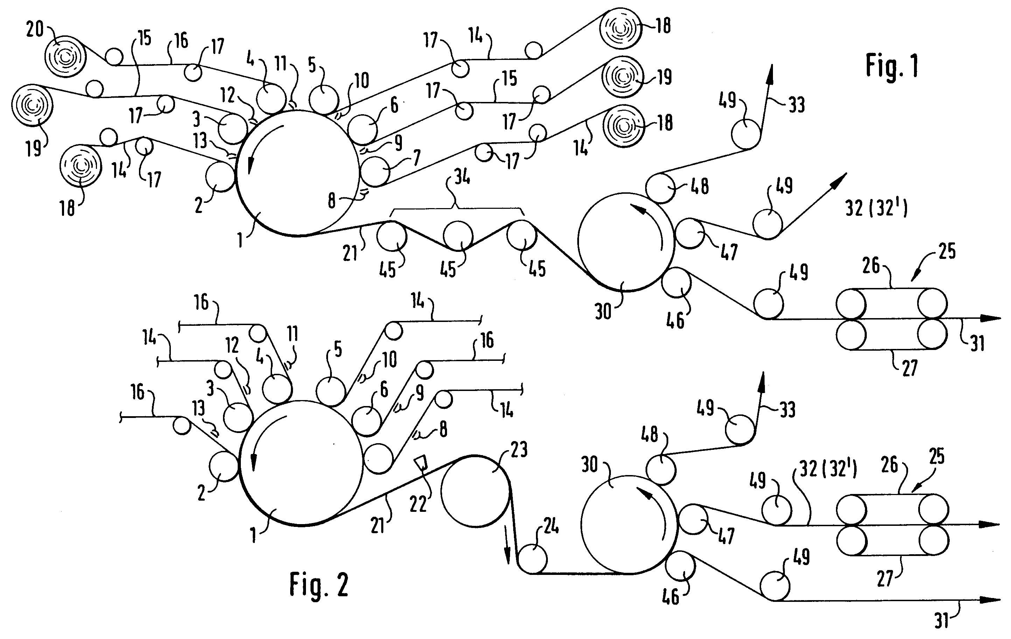

In Figur 1 ist in schematischer Schnittansicht eine erste Ausführungsform der Vorrichtung nach der Erfindung zum Herstellen einer Anzahl von zwei- oder mehrlagigen Einzelverbunden 21 dargestellt. Eine temperierbare Walze 1, bei der es sich im allgemeinen um eine angetriebene Stahlwalze großen Durchmessers handelt, besitzt eine hochglanzpolierte oder mattierte Umfangsfläche und bildet ein Siegelwerkzeug für eine Anzahl von Kunststoffolienbändern, die miteinander gesiegelt werden. Bei diesen Kunststoffolienbändern, die auf Vorratsrollen 18, 19, 20 aufgewickelt sind, handelt es sich beispielsweise um biaxial verstreckte Kunststoffolienbänder 14, monoaxial verstreckte Kunststoffolienbänder 15 und unverstreckte Kunststoffolienbänder 16. Entlang der Umfangsfläche der Walze 1 sind in gleichgroßen oder unterschiedlichen Abständen zueinander beheizte Druckwalzen 2, 3 bis 7 angeordnet, die unter Druck an die Umfangsfläche der Walze 1 anliegen. Bei sämtlichen in den Figuren 1 bis 7 dargestellten Ausführungsbeispielen der Vorrichtung nach der Erfindung sind nicht mehr als sechs derartige Kunststoffolienbänder aus Platzgründen dargestellt, jedoch können bis zu zwanzig einzelne Kunststoffolienbänder miteinander gesiegelt werden. Die Anzahl der Druckwalzen ist gleich oder größer als die Anzahl der Kunststoffolienbänder.

Wie Figur 1 zeigt, ist das einzelne, biaxial verstreckte Kunststoffolienband 14 auf einer Vorratsrolle 18 aufgewickelt, während jedes einzelne monoaxial verstreckte Kunststoffolienband 15 und jedes unverstreckte Kunststoffolienband 16 auf eine Vorratsrolle 19 bzw. 20 aufgewickelt ist. Es ist selbstverständlich, obgleich dies in Figur 1 nicht dargestellt ist, daß alle miteinander zu siegelnden Kunststoffolienbänder aus dem gleichen Kunststoff, beispielsweise Polypropylen mit der gleichen Veredelung, d.h. ausschließlich biaxial oder monoaxial verstreckt, zu dem Folienverbund 21 gesiegelt werden können. Es können selbstverständlich auch Folien aus unterschiedlichen Ausgangsmaterialien zu einem Folienverbund gesiegelt werden. Vorraussetzung ist lediglich die Siegelbarkeit der Einzelfolien untereinander. Das einzelne Kunststoffolienband wird über Führungsrollen 17 der zugehörigen Druckwalze 2, 3, ... oder 7 zugeführt. Bei diesen Druckwalzen handelt es sich um angetriebene, beheizbare Walzen, deren Durchmesser im Vergleich zu dem Durchmesser der Walze 1 sehr viel kleiner ist, was im Hinblick auf ihre Anzahl von bis zu 20 Stück selbsterklärend ist. Die Kunststoffolienbänder sind ein- oder beidseitig mit Siegelschichten ausgestattet, die während des Siegelvorgangs der Kunststoffolienbänder angeschmolzen werden, wie nachstehend noch näher erläutert werden wird. Bei den Druckwalzen 2 bis 7 handelt es sich beispielsweise um Presseure, deren Metallwalzenkörper mit temperaturbeständigen Gummischichten belegt sind und die über nicht dargestellte Heizsysteme beheizt werden. Ebenso können die Führungsrollen 17, die den einzelnen Presseuren vorgeschaltet sind, vorgeheizt sein, so daß die von den Vorratsrollen den Presseuren zugeführten Kunststoffolienbahnen schon aufgeheizt sind. Die Druckwalzen bzw. Presseure 2 bis 7 sind hydraulisch, pneumatisch oder mechanisch über ein Hebelsystem verfahrbar, so daß sie von der Umfangsfläche der Walze 1 abgehoben werden können, um das Einführen des einzelnen Kunststoffolienbandes in den Spalt zu erleichtern, der von der Umfangsfläche der Walze 1 und der jeweiligen Druckwalze 2 bis 7 begrenzt wird. Die Druckwalzen können auch reine Metallwalzen ohne Gummibeschichtung sein.

Die Positionierung der Druckwalzen bzw. der Presseure in ihren Arbeitsstellungen, bzw. das Aufbringen des Drucks, mit dem die Druckwalzen an die Walze 1 angelegt werden und dabei einen entsprechenden Siegeldruck ausüben, um das jeweilige Kunststoffolienband auf den schichtmäßig anwachsenden Folienverbund zu siegeln, kann, wie schon erwähnt, entweder hydraulisch, pneumatisch oder durch einen Hebelmechanismus geschehen.

Nahe den Kontaktflächen von der Walze 1 und den einzelnen Presseuren ist jeweils eine verfahrbare Heizeinrichtung 8, 9, ... 13 zum gezielten Verändern der mechanischen Eigenschaften der Ausgangsfolie, z.B. durch Schrumpfen und, wenn nötig, zusätzlich zu den beheizten Walzen, zum Anschmelzen der Siegelschichten der Kunststoffolienbänder angeordnet. Bei dieser Heizeinrichtung handelt es sich insbesondere um Infrarotstrahler, die entlang einem Teilstück der Bahn des Kunststoffolienbandes verfahrbar sind. Diese Heizeinrichtungen können auch mit Heißluft beaufschlagbare Luftdüsen sein, die das Anschmelzen der Siegelschichten der Kunststoffolienbänder unmittelbar vor dem Zusammenführen im jeweiligen Spalt bewirken. In Figur 2 sind die Heizeinrichtungen 8 bis 13 in Positionen außerhalb der Spalten zwischen der Walze 1 und den Druckwalzen 2 bis 7 dargestellt. Der Abstand der Heizeinrichtungen zu der Umfangsfläche der Walze 1 ist gleichfalls einstellbar.

Die schwerpunktmäßig herausgehobene Verwendung koextrudierter biaxial oder monoaxial verstreckter, mit Siegelschichten ausgerüsteter Kunststoffolienbänder für das Laminieren bzw. Siegeln zu einem Folienverbund bedeutet keine Einschränkung der Erfindung auf diese Ausgangsmaterialien. Eine praktische Alternative zur Herstellung eines Folienverbundes aus koextrudierten Kunststoffsiegelbändern ergibt sich durch ein schichtmäßiges Siegeln von materialmäßig absolut identischen Monofolien, die nicht verstreckt sind und sich einzig und allein durch ihren Orientierungsgrad und die daraus resultierende morphologische Struktur unterscheiden. Gegenüber unverstreckten Monofolien weisen mono- oder biaxial verstreckte Folien eine andere morphologische Struktur auf, die sich u.a. in differierenden Schmelztemperaturen der Kunststoffolien niederschlägt. Dies läßt sich dahingehend nutzen, daß in einem Folienverbund, bestehend aus alternierend geschichteten unverstreckten und verstreckten Kunststoffolienbändern, die unverstreckten Kunststoffolienbänder bei den üblichen Verarbeitungsbedingungen bereits anschmelzen und dadurch Haftvermittlerfunktionen gegenüber den bei den Druck- und Wärmebedingungen des Siegelvorgangs noch nicht schmelzenden, verstreckten Kunststoffolienbändern übernehmen. Mit anderen Worten bedeutet dies, daß bei einer derartigen alternierenden Schichtung von verstreckten und unverstreckten Kunststoffolienbändern keines der Bänder Siegelschichten aufweisen muß und sie trotzdem miteinander laminiert werden können. Die Dicke des geschichteten Folienverbundes 21 liegt im Bereich von 100 bis 600 µm.

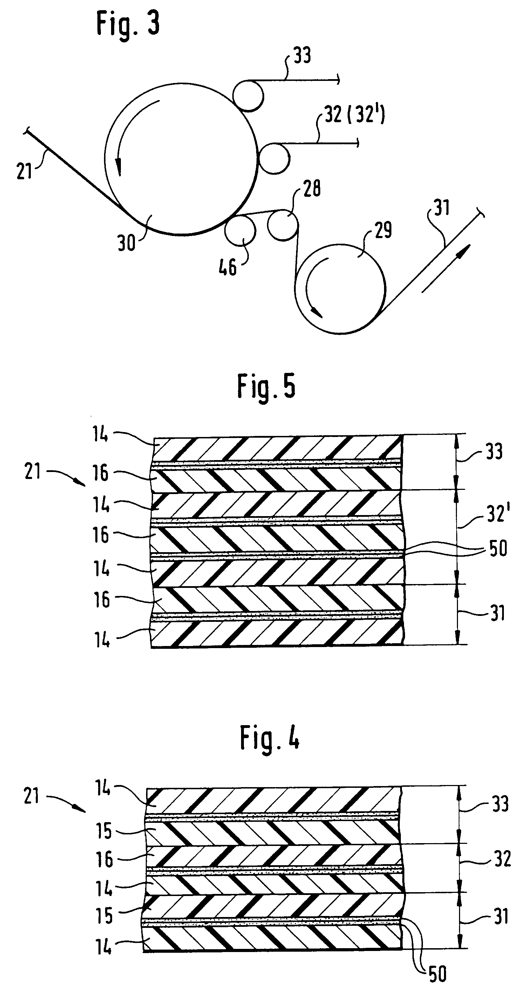

Nach dem Abzug von der Walze 1 durchläuft der Folienverbund 21 eine Kühlanordnung 34 bestehend aus mehreren Kühlwalzen 45 und wird um einen Teilumfang einer Trennwalze 30 herumgeführt und auf dieser in Einzelverbunde 31, 32 (32'), 33 aufgetrennt, deren Aufbau anhand der Figuren 4 und 5 noch näher beschrieben werden wird. Entlang des Teilumfangs der Trennwalze 30 liegen Abzugswalzen 46,47,48 im Abstand voneinander an, über die die Einzelverbunde 31, 32 (32'), 33 von dem Folienverbund 21 abgetrennt und über je eine Umlenkwalze 49 der weiteren Verarbeitung zugeführt werden. Beispielhaft ist in Figur 1 dargestellt, daß der eine Einzelverbund 31 horizontal durch eine temperierbare Doppelbandpresse 25 hindurchläuft, die aus zwei endlos umlaufenden Preßbändern 26, 27 besteht, die einen gemeinsamen Druckspalt bilden. Auch die beiden übrigen Einzelverbunde 32 (32') und 33 können derartige Doppelbandpressen, obgleich dies nicht gezeigt ist, durchlaufen. Mit Hilfe dieser Doppelbandpresse 25 kann sowohl die Ober- als auch die Unterseite des Einzelverbundes 31 in vorgegebener Weise strukturiert oder auch geglättet werden.
Die in Figur 2 gezeigte zweite Ausführungsform der erfindungsgemäßen Vorrichtung ist in bezug auf die Walze 1, die Druckwalzen bzw. Presseure 2 bis 7 und die Zuführung der Kunststoffolienbänder 14 und 16 ähnlich aufgebaut wie die erste Ausführungsform nach Figur 1. Aus Platzgründen sind bei dieser Ausführungsform die Vorratsrollen für die Kunststoffolienbänder weggelassen. Es werden beispielsweise mit dieser Vorrichtung biaxial verstreckte Kunststoffolienbänder 14 alternierend mit unverstreckten Kunststoffolienbändern 16 zu dem Folienverbund 21 gesiegelt bzw. laminiert. Diese Ausführungsform der Vorrichtung ist mit Zusatzaggregaten ausgerüstet, wie beispielsweise einer Kühleinrichtung aus einem Ventilator oder einer Luftdüse 22, aus der Kühlluft auf die Oberseite des Folienverbundes 21 geblasen wird, und/oder aus einer temperierbaren Kühlwalze 23, über die der Folienverbund 21 entlang einem Teilumfang nach dem Ablösen von der Walze 1 geführt ist. Nach der Kühlwalze 23 ist eine Umlenkwalze 24 vorgesehen, durch welche der Folienverbund 21 aus seiner Vertikalrichtung in eine Horizontalrichtung umgelenkt wird, um anschließend um den Teilumfang der Trennwalze 30 herumgeführt zu werden. Entlang des Umfangs der Trennwalze 30 sind in der gleichen Weise wie bei dem Ausführungsbeispiel nach Figur 1 Abzugswalzen 46, 47, 48 angeordnet, über die die Einzelverbunde 31, 32 (32'), 33 von dem Folienverbund 21 nacheinander abgetrennt und über je eine Umlenkwalze 49 ihrer Weiterverarbeitung zugeführt werden. Beispielhaft ist in Figur 2 gezeigt, daß der mittlere Einzelverbund 32 bzw. 32' eine temperierbare Doppelbandpresse 25 durchläuft, die aus zwei endlos umlaufenden Preßbändern 26 und 27 besteht, die einen gemeinsamen Druckspalt bilden, durch den der Einzelverbund 32 bzw. 32' hindurchgeführt wird. Mit Hilfe dieser Doppelbandpresse 25 kann sowohl die Ober- als auch die Unterseite des Einzelverbundes 32 bzw. 32' in einer vorgegebenen Weise strukturiert oder auch geglättet werden. Die Doppelbandpresse kann auch zur zusätzlichen Kühlung des Einzelverbundes genutzt werden, in Kombination mit dem Ventilator und/oder der Kühlwalze. Ebenso kann die Kühlung durch ein Kühlbad allein oder in Verbindung mit den zuvor erwähnten Kühlaggregaten erfolgen.

In Figur 3 ist ein Detail bzw. ein Zusatzaggregat einer dritten Ausführungsform der Vorrichtung gezeigt, die sich gegenüber der ersten und zweiten Ausführungsform der Vorrichtung dadurch unterscheidet, daß als Zusatzaggregat für den unteren Einzelverbund 31 eine Walzenanordnung aus einer temperierbaren Walze 28 und einer angetriebenen, gleichfalls temperierbaren Walze 29 vorhanden ist, wobei der Durchmesser der Walze 29 ein Mehrfaches des Durchmessers der Walze 28 beträgt. Mit dieser Walzenanordnung wird der Rollneigung des Einzelverbundes 31 durch Dehnen desselben, indem eine hohe Zugkraft auf den Einzelverbund ausgeübt wird, entgegengewirkt. Diese Rollneigung entsteht beispielsweise dadurch, daß das obere Kunststoffolienband eine größere Länge aufweist als das untere Kunststoffolienband des geschichteten Einzelverbundes 31, das die Grundschicht des Schichtaufbaus des Folienverbundes 21 bildet. Mit dieser Vorrichtung kann allerdings auch bewußt eine Rollneigung induziert werden.

Der Einzelverbund 31 wird über die Walze 28 mit dem kleinen Durchmesser gezogen, wodurch es zu einer Streckung der Basisschicht bzw. des unteren Kunststoffolienbandes kommt und somit die Längenunterschiede zwischen dem unteren und oberen Kunststoffolienband ausgeglichen werden, wodurch die Rollneigung des Einzelverbundes 31 eliminiert wird.

Figur 4 zeigt einen schematischen Schnitt durch einen Folienverbund 21, der z. B. aus sechs Kunststoffolienbändern 14, 15, 14, 16, 15, 14 aufgebaut ist, von denen jedes eine Siegelschicht 50 aufweist. Die Kunststoffolienbänder werden derart aufeinander aufgebracht und miteinander gesiegelt, daß an zwei Stellen siegelschichtfreie Oberflächen zweier Kunststoffolienbänder aufeinanderliegen. Entlang dieser Stellen ist ein problemloses Auftrennen des Folienverbundes 21 in drei Einzelverbunde 31, 32, 33 zu bewerkstelligen, von denen jeder aus zwei Lagen von Kunststoffolienbändern besteht.

In Figur 5 ist ein schematischer Schnitt durch einen Folienverbund 21 aus sieben Kunststoffolienbänder 14, 16, 14, 16, 14, 16, 14 gezeigt, von denen das mittlere Kunststoffolienband 16 zwei Siegelschichten 50, und die übrigen Kunststoffolienbänder nur jeweils eine Siegelschicht 50 aufweisen. Die Kunststoffolienbänder sind wieder derart aufeinanderliegend aufgebracht und miteinander gesiegelt, daß an zwei Stellen siegelschichtfreie Oberflächen zweier Kunststoffolienbänder aufeinanderliegen, ohne daß es zu einem unlösbaren Verbund kommt. Entlang dieser Stellen wird der Folienverbund problemlos aufgetrennt, so daß zwei 2-lagige Einzelverbunde 31, 33 und ein 3-lagiger Einzelverbund 32' erhalten werden. Es bedarf keiner weiteren Erläuterungen, daß aus einem Folienverbund 21 aus mehr als 7 bis zu 20 Kunststoffolienbändern mehr als drei Einzelverbunde hergestellt werden können, die keineswegs nur aus 2 oder 3 Lagen bestehen, sondern stattdessen auch 4- oder 5-lagig sein können.

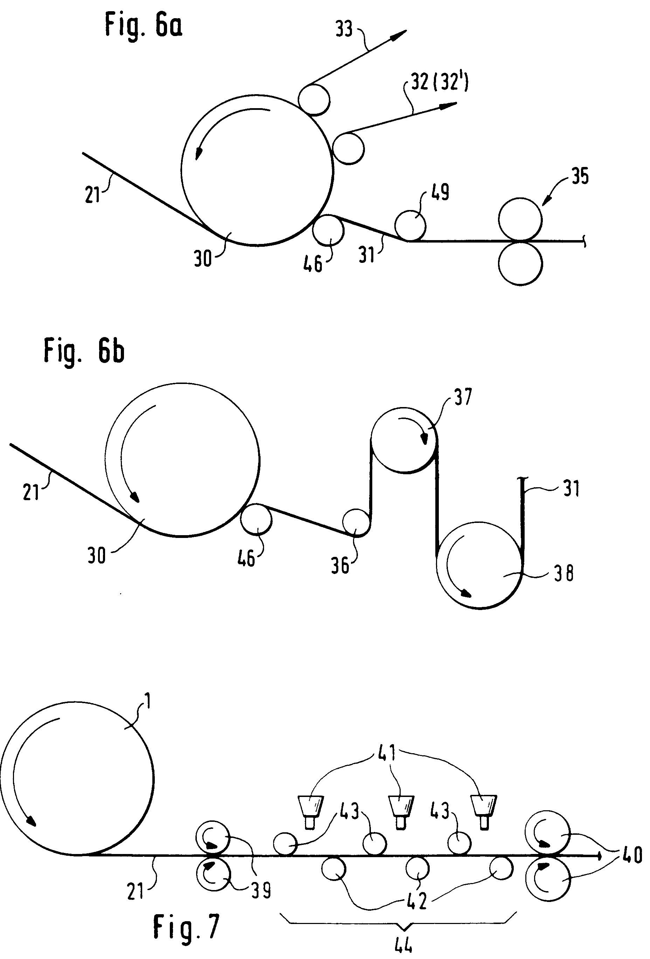

Bei dem in Figur 6a gezeigten Zusatzaggregat zu der erfindungsgemäßen Vorrichtung ist für das beidseitige Prägen des Einzelverbundes 31 eine Prägestation 35, die zwei Prägerollen umfaßt, in Laufrichtung des Einzelverbundes 31 nach der Trennwalze 30 angeordnet. Der Einzelverbund 31 durchläuft nach dem Ablösen von der Trennwalze 30 einen Spalt zwischen den beiden Prägewalzen der Prägestation 35, so daß die Ober- und Unterseite des Einzelverbundes 31 eine entsprechende Strukturierung erhalten.

Eine andere Möglichkeit der Oberflächenstrukturierung des Einzelverbundes 31 ergibt sich mit der in Figur 6b dargestellten Vorrichtung. Hierzu wird der Einzelverbund 31 mit hoher Zugspannung nach dem Ablösen von der Trennwalze 30 über eine Umlenkrolle 36 und in Mäanderform über temperierbare Walzen 37 und 38 gezogen, die in Vertikalrichtung zueinander versetzt sind. Die Oberflächen der Walzen 37 und 38 sind entweder hochglanzpoliert oder strukturiert. Durch die hohe Zugspannung, die auf den Einzelverbund 31 durch die entsprechende Antriebsgeschwindigkeit der Walzen 37, 38 ausgeübt wird, kommt es zu einer entsprechenden Strukturierung der beiden Seiten des Einzelverbundes 31.

Bei den Ausführungsbeispielen der Figuren 3, 6a und 6b entsprechen die übrigen Teile der Vorrichtungen jeweils der ersten bzw. zweiten Ausführungsform nach den Figuren 1 und 2 und sind aus Platzgründen nicht dargestellt.

In Figur 7 ist eine Kühlanordnung 44 bzw. Kühlstrecke gezeigt, die nach der Walze 1 angeordnet ist. Eine derartige Kühlanordnung 44 kann bei allen Ausführungsformen, wie sie in den voranstehenden Figuren 1 bis 3, 6a und 6b gezeigt sind, vorhanden sein. Die Kühlanordnung 44 besteht aus einer Anzahl von Ventilatoren 41 oder Luftdüsen, die mit Kühlluft beaufschlagt werden, und oberhalb des in Planlage transportierten Folienverbundes 21 angebracht sind. Desweiteren umfaßt die Kühlanordnung 44 untere Kühlwalzen 42, über die der Folienverbund 21 transportiert wird, und obere Kühlwalzen 43, die mit der Oberseite des Folienverbundes 21 in Kontakt stehen. Die Kühlwalzen 42 und 43 sind zueinander versetzt, so daß sie alternierend mit der Ober- und Unterseite des Folienverbundes 21 in Berührung stehen.

Im folgenden wird die Betriebsweise der einzelnen Ausführungsformen der Erfindung näher beschrieben. Die einzelnen Kunststoffolienbänder 14 bis 16 sind auf Vorratsrollen 18, 19 und 20 aufgewickelt und werden über Führungsrollen 17 der Umfangsflächen der Walze 1 zugeführt. Die in Figur 1 auf der rechten Seite der Walze 1 als unterstes Kunststoffolienband gezeigte biaxial verstreckte Kunststoffolie wird als unterste bzw. als Basisschicht um einen großen Teilumfang der Walze 1 herumgeführt. Dieses Kunststoffolienband 14 besitzt beispielsweise nur an seiner, von der Walze 1 abgewandten Seite eine Siegelschicht, die durch die Walze 1 und die Druckwalze 7 und, wenn nötig, durch die Heizeinrichtung 8 angeschmolzen wird. In einem bestimmten Abstand von der Auflaufstelle des Kunststoffolienbandes 14 auf die Walze 1 befindet sich die Auflaufstelle für das monoaxial verstreckte Kunststoffolienband 15, das gleichfalls erwärmt wird. Dieses Kunststoffolienband 15 ist im allgemeinen mit einer Siegelschicht ausgerüstet, die der Siegelschicht des Kunststoffolienbandes 14 zugewandt ist, und wird unter Druckanwendung durch die Druckwalze 6 auf das Kunststoffolienband 14 aufgesiegelt. Die nächste Auflaufstelle für ein weiteres Kunststoffolienband 14 auf die Umfangsfläche der Walze 1 befindet sich im gleichen Abstand von der Druckwalze 7 entfernt, der zwischen den beiden Druckwalzen 7 und 6 vorhanden ist. Dieses weitere Kunststoffolienband 14 hat eine von den beiden miteinander laminierten Kunststoffolienbändern abgewandte Siegelschicht und kann, aber muß nicht, durch die Heizeinrichtung 10 wärmebehandelt werden. Durch den ausgeübten Druck der Druckwalze 5 auf die beiden schon miteinander gesiegelten Kunststoffolienbänder 14 und 15, die einen Einzelverbund 31 bilden, wird das Kunststoffolienband 14 auf den Einzelverbund 31 aufgebracht, eine Siegelverbindung findet nicht statt, da Folien ohne Siegelschichten aneinanderliegen. Auf die gleiche Weise werden dann der Reihe nach noch ein unverstrecktes Kunststoffolienband 16, ein monoaxial verstrecktes Kunststoffolienband 15 sowie ein biaxial verstrecktes Kunststoffolienband 14, jedes mit einer Siegelschicht ausgerüstet, der Reihe nach unter Druck und mit oder ohne Wärmeanwendung auf die schon aufeinander aufliegenden drei Kunststoffolienbänder zu dem endgültigen Folienverbund 21 aufgebracht. Dabei ist das unverstreckte Kunststoffolienband 16 mit seiner Siegelschicht der Siegelschicht des zuletzt aufgebrachten Kunststoffolienbandes 14 zugewandt und wird mit diesem zu dem Einzelverbund 32 gesiegelt. Die Siegelschicht des monoaxial verstreckten Kunststoffolienbandes 15 ist von dem bisherigen Aufbau abgewandt, so daß die siegelschichtfreien Oberflächen der Kunststoffolienbänder 16 und 15 aufeinander liegen. Zuletzt wird die Siegelschicht des Kunststoffolienbandes 14 mit der Siegelschicht des Kunststoffolienbandes 15 gesiegelt, wobei die Bänder 15, 14 den Einzelverbund 31 bilden.

Auf diese Art und Weise kann beispielsweise ein Folienverbund aus bis zu zwanzig Einzelfolien aus Polypropylen aufgebaut werden, wobei die Einzelfolien biaxial und/oder monoaxial verstreckt und/oder unverstreckt, thermoplastisch, ein- oder beidseitig mit Siegelschichten ausgerüstet sein können. Desweiteren können die Einzelfolien druckvorbehandelt oder nicht vorbehandelt sein. Durch den Einsatz der Heizeinrichtungen in Gestalt der Infrarotstrahler 8 bis 13 können die mechanischen Eigenschaften der Ausgangsfolien, z.B. bei orientierten Folien durch Schrumpfen, und somit auch die Eigenschaften des Folienverbundes nach Wunsch beeinflußt werden. Bei dem Verfahren können gleichartige oder unterschiedliche Kunststoffolienbänder miteinander gesiegelt werden. Das bezieht sich sowohl auf veredelte als auch nicht-veredelte Ausgangsfolien. Als Ausgangsfolien können ebenso Metallfolien allein oder im Verbund mit Kunststoffolien, Papierbahnen oder sonstige Materialien, die nicht aus Kunststoff bestehen, verwendet werden. Bei der Wärmeanwendung muß beachtet werden, daß die Siegeltemperatur unterhalb der Schmelztemperatur der einzelnen Kunststoffolienbänder gehalten werden muß, wobei im allgemeinen die unverstreckten Folienbänder gegenüber den verstreckten Folienbändern eine niedrigere Schmelztemperatur besitzen.

Durch das Erwärmen jedes Kunststoffolienbandes vor dem Auflaufen auf die Umfangsfläche der beheizten Walze 1 werden die Siegelschichten der Kunststoffolienbänder angeschmolzen. Die benötigte Siegeltemperatur liegt, je nach dem Siegelrohstoff, zwischen 90 ° und 140 °C. Da die Siegeltemperatur stets unterhalb der Schmelztemperatur von Polypropylen gehalten wird, werden die in den einzelnen Kunststoffolienbändern vorhandenen Orientierungen durch die Verstreckung auch nach dem Siegeln beibehalten.

Nach dem Abzug von der Walze 1 wird der Folienverbund 21 nach Figur 1 über die Trennwalze 30 geführt und in die Einzelverbunde 31, 32 bzw. 32' und 33 aufgetrennt, die sodann für eine Weiterverarbeitung vorgesehen sind.

Bei den in den Figuren 1 bis 3, 6a, 6b und 7 gezeigten Ausführungsformen der Vorrichtung wird der Folienverbund 21 nach dem Ablösen von der Umfangsfläche der Walze 1 zusätzlichen Behandlungsschritten unterzogen, wie beispielsweise mit Kühlluft durch den Ventilator 22 in Figur 2 angeblasen und durch Kontakt mit der temperierbaren Kühlwalze 23. Der oder die Einzelverbunde werden nach dem Auftrennen beispielsweise durch eine gekühlte Doppelbandpresse 25 noch weiter abgekühlt. Anstelle des Ventilators 22 kann auch eine Luftdüse verwendet werden, durch die Kühlluft auf die Oberseite des Folienverbundes 21 geblasen wird. Durch das Abkühlen des Folienverbundes 21 wird seine Planlage verbessert.

Mit den Zusatzaggregaten gemäß der Figur 3 zu der Vorrichtung nach der Erfindung kann der Einzelverbund 31 durch die temperierbare Walze 28 und die angetriebene temperierbare Walze 29 gedehnt werden, um einer auftretenden Rollneigung des Einzelverbundes entgegenzuwirken.

Weitere Verfahrensmaßnahmen zur Behandlung des oder der Einzelverbunde schließen eine beidseitige Prägung des oder der Einzelverbunde ein, wobei unterschiedliche Prägemaßnahmen getroffen werden können. Mit den Zusatzaggregaten gemäß den Figuren 6a und 6b werden diese Prägungsverfahrensschritte durchgeführt. Eine beidseitige Prägung eines Einzelverbundes 31 wird in der Prägestation 35 vorgenommen, die aus zwei Prägerollen besteht, durch deren Walzenspalt der Einzelverbund 31, wie in Figur 6a gezeigt, hindurchläuft.

Eine andere Verfahrensmaßnahme zum Strukturieren des Einzelverbundes 31 besteht bei der Vorrichtung nach Figur 6b darin, den Einzelverbund mäanderartig über antreibbare und temperierbare Walzen 37, 38 zu führen und durch die regelbare Umlaufgeschwindigkeit dieser Walzen eine variable Zugspannung auf den Einzelverbund 31 auszuüben, wodurch es gleichfalls zu einer Strukturierung der Oberflächen des Folienverbundes kommt. Eine Möglichkeit, den Einzelverbund ein- oder beidseitig zu prägen, besteht darin, die Walzen 37 und/oder 38 als Prägewalzen auszugestalten.

Ist eine besonders gute Planlage des Folienverbundes 21 gewünscht, so erfolgt eine intensive Kühlung bei horizontalem Folienverbundlauf mit der Vorrichtung nach Figur 7, bei der in Kombination temperierbare Kühlwalzen und Ventilatoren bzw. Luftdüsen, durch die Kühlluft auf die Oberfläche des Folienverbundes geblasen wird, zusammenwirken.

Die Folienverbunde werden in die Einzelverbunde aufgetrennt, die zur Herstellung mehrlagiger Dickfolien oder Platten mit maßgeschneiderten Eigenschaften verwendet werden, indem anstelle der einzelnen Kunststoffolienbänder derartige Einzelverbunde, wie sie nach den voranstehend beschriebenen Verfahren produziert werden, miteinander auf die gleiche Weise wie die Folienbänder gesiegelt werden.

## Patentansprüche

1. Vorrichtung zum Herstellen einer Anzahl von zwei- oder mehrlagigen Einzelverbunden aus miteinander gesiegelten Kunststoffolienbändern, mit einer Anzahl von Vorratsrollen, auf denen die Kunststoffolienbänder aufgewickelt sind, mit einer beheizbaren Walze (1) als Siegelwerkzeug, entlang dessen Umfangsfläche, in gleichgroßen oder unterschiedlichen Abständen zueinander, beheizte Druckwalzen (2, 3, 4, ...7, ...) anliegen, wobei jedes Kunststoffolienband von der Vorratsrolle über die zugeordnete Druckwalze zuführbar ist und die Kontaktfläche zwischen Druckwalze und Walze durchläuft, so daß die in Abständen voneinander auf die Umfangsfläche der Walze (1) auflaufenden Kunststoffolienbänder (14, 14, 16) unter Druck- und Wärmeanwendung auf die übereinandergeschichtet transportierten Kunststoffolienbänder durch die Druckwalzen (2, 3, 4, ...7, ...) miteinander zu einem Folienverbund (21) siegelbar sind, wobei zumindest zwischen zwei Kunststoffolienbändern keine Siegelschicht(en) vorhanden ist (sind), und der Folienverbund (21) durch eine Kühleinrichtung (34) hindurch auf eine Trennwalze (30) aufläuft und entlang eines Teilumfangs der Trennwalze (30) in Einzelverbunde (31, 32 bzw. 32', 33) auftrennbar ist.

2. Vorrichtung nach Anspruch 1, dadurch gekennzeichnet, daß nahe dem Spalt zwischen der einzelnen Druckwalze und der Umfangsfläche der Walze (1) jeweils eine verfahrbare Heizeinrichtung (8, 9, 10, ...13, ...) zum Anschmelzen von Siegelschichten (50) und/oder zum Verändern mechanischer Eigenschaften der Kunststoffolienbänder angeordnet ist.

3. Vorrichtung nach Anspruch 1, dadurch gekennzeichnet, daß die Anzahl der siegelfähigen Kunststoffolienbänder kleiner/gleich der Anzahl der Druckwalzen ist und bis zu 20 Stück beträgt.

4. Vorrichtung nach Anspruch 1, dadurch gekennzeichnet, daß die Druckwalzen hydraulisch, pneumatisch oder mechanisch unterschiedlich stark gegen die Walze (1) andrückbar sind, um einen variablen Liniendruck auf das einzelne Kunststoffolienband auszuüben.

5. Vorrichtung nach Anspruch 1, dadurch gekennzeichnet, daß die einzelne Druckwalze ein beheizter Presseur mit einem Metallkörper und einer Gummibeschichtung ist.

6. Vorrichtung nach Anspruch 1, dadurch gekennzeichnet, daß die einzelne Druckwalze eine hochglanzpolierte Metallwalze ohne Gummibeschichtung ist.

7. Vorrichtung nach Anspruch 2, dadurch gekennzeichnet, daß die einzelne Heizeinrichtung (8, 9, ...13, ...) ein entlang dem Kunststoffolienband verfahrbarer Infrarotstrahler ist, dessen Abstand zu der Walze (1) einstellbar ist.

8. Vorrichtung nach Anspruch 1, dadurch gekennzeichnet, daß der Folienverbund (21) nach dem Ablösen von der Walze (1) eine Kühlanordnung (22, 23) aus einem Ventilator (22) und/oder einer temperierbaren Kühlwalze (23) und/oder ein Kühlbad durchläuft.

9. Vorrichtung nach Anspruch 1, dadurch gekennzeichnet, daß der Einzelverbund nach dem Ablösen von der Umfangsfläche der Trennwalze über eine Walzenanordnung (28, 29) aus angetriebenen, temperierbaren Walzen mit unterschiedlichen Durchmessern zum nachträglichen Dehnen und Eliminieren der Rollneigung des Einzelverbundes läuft.

10. Vorrichtung nach Anspruch 1, dadurch gekennzeichnet, daß der Einzelverbund (31) nach dem Ablösen von der Trennwalze (30) eine Kontaktfläche zwischen zwei Prägewalzen einer Prägestation (35) durchläuft.

11. Vorrichtung nach einem oder mehreren Ansprüchen 1 bis 8, dadurch gekennzeichnet, daß der Einzelverbund (31) mit hoher Zugspannung in Mäanderform über temperierbare Walzen (37, 38) geführt ist, die in Vertikalrichtung zueinander versetzt sind und deren Oberflächen hochglanzpoliert oder strukturiert sind und die nach der Trennwalze (30) angeordnet sind.

12. Vorrichtung nach einem oder mehreren der Ansprüche 1 bis 7, dadurch gekennzeichnet, daß der Folienverbund (21) nach dem Ablösen von der Walze (1) in Planlage eine Kühlanordnung (44) durchläuft, die aus einer Anzahl von Ventilatoren (41) und/oder Kühlwalzen (42, 43) besteht, die zueinander versetzt, alternierend mit der Ober- und Unterseite des Folienverbundes (21) in Kontakt stehen.

13. Verfahren zum Herstellen einer Anzahl von zwei- oder mehrlagigen Einzelverbunden aus biaxial und/oder monoaxial und/oder unverstreckten thermoplastischen Kunststoffolien, die zumindest einseitig mit einer Siegelschicht koextrudiert sind, unter Verwendung der Vorrichtung nach Anspruch 1, durch kontinuierliches, additives Aufsiegeln einzelner bewegter Kunststoffolienbänder auf ein bewegtes ersten Kunststoffolienbahn, unter Druck- und Wärmeanwendung zu einem Folienverbund vorgegebener Enddicke, wobei die Kunststoffolienbänder getrennt und im Abstand voneinander einer beheizbaren Walzenfläche zugeführt und entlang dieser Fläche so aufeinander aufgebracht und gesiegelt werden, daß zumindest zwischen zwei aufeinanderliegenden Kunststoffolienbändern keine Siegelschicht(en) vorhanden ist (sind) und daß der Folienverbund nach dem Siegeln gekühlt und entlang der nicht miteinander gesiegelten Kunststoffolienbänder in Einzelverbunde aufgetrennt wird.

14. Verfahren nach Anspruch 13, dadurch gekennzeichnet, daß gleichartige oder unterschiedliche Kunststoffolienbänder miteinander gesiegelt werden.

15. Verfahren nach Anspruch 14, dadurch gekennzeichnet, daß die abwechselnd aufeinandergeschichteten mono- und/oder biaxial verstreckten sowie unverstreckten Monofolienbänder aus demselben Polymerwerkstoff miteinander versiegelt werden, wobei die unverstreckten Folienbänder gegenüber den verstreckten Folienbändern eine niedrigere Schmelztemperatur aufweisen.

16. Verfahren nach Anspruch 14, dadurch gekennzeichnet, daß die Siegeltemperatur unterhalb der Schmelztemperatur der einzelnen Kunststoffolienbänder gehalten wird.

17. Verfahren nach Anspruch 14, dadurch gekennzeichnet, daß jedes Kunststoffolienband vor dem Auflaufen auf die beheizte gekrümmte Fläche zusätzlich erwärmt wird, um die Siegelschichten der Kunststoffolienbänder anzuschmelzen und/oder die mechanischen Eigenschaften der Kunststoffolienbäner zu beeinflussen.

18. Verfahren nach Anspruch 14, dadurch gekennzeichnet, daß der Folienverbund nach dem Ablösen von der gekrümmten Fläche durch Anblasen mit Kühlluft und/oder durch Kontakt mit Kühlwalzen abgekühlt wird.

19. Verfahren nach Anspruch 13, dadurch gekennzeichnet, daß zumindest ein Einzelverbund durch eine Doppelbandpresse hindurchläuft.

20. Verfahren nach Anspruch 13, dadurch gekennzeichnet, daß der Einzelverbund über eine Walzenanordnung aus angetriebenen Walzen mit unterschiedlichen Durchmessern geführt wird, die eine Zugspannung auf den Einzelverbund ausüben, um ihn zu dehnen und seiner Rollneigung entgegenzuwirken.

21. Verfahren nach Anspruch 13, dadurch gekennzeichnet, daß der Einzelverbund ein- oder beidseitig geprägt wird.

22. Verfahren nach Anspruch 13, dadurch gekennzeichnet, daß als Ausgangsmaterial für den Folienverbund zusätzlich zu den Kunststoffolienbändern Bänder aus anderen Materialien als Kunststoff und Verbunde solcher Bänder mit Kunststoffolien kontinuierlich mit den Kunststoffolienbändern gesiegelt werden.

23. Verfahren nach einem oder mehreren der Ansprüche 13 bis 22, dadurch gekennzeichnet, daß die Behandlungsschritte Kühlen, Dehnen und Prägen des Einzelverbundes in allen möglichen Kombinationen vorgenommen werden.

24. Verfahren zum Herstellen einer mehrlagigen Dickfolie aus Einzelverbunden, bei dem anstelle einzelner Kunststoffolienbänder als Ausgangsmaterial mehrschichtige Einzelverbunde miteinander gesiegelt werden, die nach einem oder mehreren der Ansprüche 13 bis 23 herstellbar sind, und bei dem die Dickfolie in Mehrlagenfolien auftrennbar ist.

## Claims

1. A device for producing a plurality of individual, two- or multilayered film composites obtained from plastics film webs which are mutually bonded by sealing, said device comprising a plurality of supply rolls on which the plastics film webs are wound, a heatable roll (1) forming the sealing tool, against the circumferential surface of which heated pressure rolls (2,3,4, ... 7, ...) rest at equal or different distances from one another, whereby each plastics film web is conveyed from its supply roll over the respective pressure roll and passed through the contact surface between said pressure roll and the roll (1), such that the plastics film webs (14, 15, 16) conveyed onto the circumferential surface of the roll (1) at mutual distances from each other can be mutually sealed by applying pressure and heat to the plastics film webs being transported in a super-imposed manner, to give a film composite (21), whereby pressure and heat application is effected by means of the pressure rolls (2, 3, 4, ... 7, ...) and no sealing layer is present between at least two of the plastics film webs, and the resulting film composite (21) is conveyed, via a cooling device (34), onto a separating roll (30) where it can be split into individual film composites (31, 32 or 32', 33) along a partial cirucumference of the separating roll (30).

2. The device as claimed in claim 1, wherein a displaceable heating device (8, 9, 10, ... 13, ...) is disposed near to the gap between each of the individual pressure rolls and the circumferential surface of the roll (1) for fusing the sealing layers (50) and/or changing mechanical characteristics of the plastics film webs.

3. The device as claimed in claim 1, wherein the number of sealable plastics film webs is less than/equal to the number of pressure rolls and is up to 20.

4. The device as claimed in claim 1, wherein the pressure rolls can be pressed, by hydraulic pneumatic or mechanical means, with different intensity against the roll (1), in order to exert a variable line pressure on the individual plastics film web.

5. The device as claimed in claim 1, wherein the individual pressure roll is a heated backing roll with a metal body and a rubber coating.

6. The device as claimed in claim 1, wherein the individual pressure roll is a metal roll polished to a high gloss, without rubber coating.

7. The device as claimed in claim 2, wherein the individual heating device (8, 9, ... 13, ...) is an infrared heater which can be displaced along the plastics film web, the distance of which heater from the roll (1) is adjustable.

8. The device as claimed in claim 1, wherein, after release from the roll (1) the film composite (21) passes through a cooling arrangement (22, 23) consisting of a fan (22) and/or a temperature-controllable chill roll (23) and/or a cooling bath.

9. The device as claimed in claim 1, wherein, after release from the circumferential surface of the separating roll, the individual composite runs over a roll arrangement (28, 29) comprising driven, temperature-controllable rolls with different diameters, for subsequent stretching and eliminating the curling tendency of the individual composite.

10. The device as claimed in claim 1, wherein, after release from the separating roll (30), the individual composite (31) passes through a contact surface between two embossing rolls of an embossing station (35).

11. The device as claimed in one or more of claims 1 to 8, wherein the individual composite (31) is guided with high tensile stress in a meandering form over temperature-controllable rolls (37, 38), which are offset with respect to each other in a vertical direction and the surfaces of which are polished to a high gloss or structured and which are disposed after the separating roll (30).

12. The device as claimed in one or more of claims 1 to 7, wherein, after release from the roll (1), the film composite (21) passes in a flat state through a cooling arrangement (44), which comprises a number of fans (41) and/or chill rolls (42, 43) which are offset with repsect to each other and are in contact alternately with the top and bottom side of the film composite (21).

13. A process for producing a plurality of two- or multilayered individual film composites from biaxially stretched and/or monoaxially stretched and/or unstretched thermoplastic plastics film webs produced by coextrusion with a sealing layer on at least one surface, by means of the device as claimed in claim 1, said process comprising the continual, additive sealing of individual, moved plastics film webs onto a moved, first plastics film web with the application of pressure and heat, such that a composite film of a predetermined final thickness is obtained, feeding the individual plastics film webs separately and at a mutual distance to a heated roll surface and superimposing and sealing them along this surface such that no sealing layer is present between at least two of the superimposed plastics film webs, cooling the film composite after sealing and separating the composite into a plurality of individual composites, along those plastics film webs which are not joined by sealing.

14. The process as claimed in claim 13, wherein plastics film webs of the same or different types are sealed together.

15. The process as claimed in claim 14, wherein the mono- and/or biaxially stretched and unstretched monofilm webs, which are alternately superposed and are sealed together, comprise the same polymeric material, the unstretched film webs having a lower melting temperature than the stretched film webs.

16. The process as claimed in claim 14, wherein the sealing temperature is kept below the melting temperature of the individual plastics film webs.

17. The process as claimed in claim 14, wherein each plastics film web is additionally heated before contacting the heated curved surface, in order to fuse the sealing layers of the plastics film webs and/or affect the mechanical characteristics of the plastics film webs.

18. The process as claimed in claim 14, wherein, after release from the curved surface, the film composite is cooled by blowing with cooling air and/or by contact with chill rolls.

19. The process as claimed in claim 13, wherein at least one individual composite passes through a double belt press.

20. The process as claimed in claim 13, wherein the individual composite is guided over a roll arrangement from driven rolls having different diameters which exert a tensile stress on the individual composite, in order to stretch it and counteract its tendency to curling.

21. The process as claimed in claim 13, wherein the individual composite is embossed on one or both sides.

22. The process as claimed in claim 13, wherein, in addition to the plastics film webs, webs of other materials than plastics and composites of such webs with plastics films are used as starting material for the film composite and continually sealed to the plastics film webs.

23. The process as claimed in one or more of claims 13 to 22, wherein the treatment stages cooling, stretching and embossing of the individual composite are carried out in all possible combinations.

24. The process for producing a multi-layer thick film from individual composites, in which instead of individual plastics film webs as starting material, multi-layer individual composites are sealed together, which are producible as claimed in one or more of claims 13 to 23, and in which the thick film can be separated into multi-layer films.

## Revendications

1. Dispositif pour la fabrication d'un nombre de stratifiés individuels à deux ou plusieurs couches à partir de bandes de feuilles en matière plastique scellées ensemble, comprenant un nombre de rouleaux d'alimentation sur lesquels sont enroulées les bandes de feuilles en matière plastique, un tambour (1) pouvant être chauffé, servant d'outil de scellement, le long de la surface du pourtour duquel sont appliqués de façon équidistante ou à des distances différentes les uns par rapport aux autres des cylindres presseurs (2, 3, 4, ...7, ...) chauffés, chaque bande de feuille en matière plastique pouvant être amenée du rouleau d'alimentation par l'intermédiaire du cylindre presseur associé et parcourant à travers la surface de contact entre le cylindre presseur et le tambour, de telle sorte que les bandes (14, 14, 16) de feuille en matière plastique arrivant espacées les unes des autres sur la surface du pourtour du tambour (1) peuvent être scellées ensemble au moyen des cylindres presseurs (2, 3, 4...7, ...) par une application de pression et de chaleur sur les bandes de feuilles en matière plastique transportées de façon superposée, pour donner un stratifié (21) de feuilles, au moins entre deux bandes de feuilles en matière plastique, aucune couche de scellement n'étant présente et le stratifié (21) de feuilles étant amené à travers un dispositif de refroidissement (34) à un tambour de séparation (30) et pouvant être séparé le long d'une portion du pourtour du tambour de séparation (30) en des stratifiés individuels (31, 32 ou 32', 33).

2. Dispositif selon la revendication 1, caractérisé en ce que, respectivement un dispositif de chauffage (8, 9, 10,..., 13...) déplaçable, destiné à commencer à faire fondre des couches de scellement (50) et/ou à modifier des caractéristiques mécaniques des bandes de feuilles en matière plastique, est disposé près de l'intervalle entre le cylindre presseur individuel et la surface du pourtour du tambour (1).

3. Dispositif selon la revendication 1, caractérisé en ce que le nombre des bandes de feuilles en matière plastique pouvant être scellées est inférieur/égal au nombre de cylindres presseurs et va jusqu'à 20.

4. Dispositif selon la revendication 1, caractérisé en ce que les cylindres presseurs peuvent être pressés contre le tambour (1) avec une force d'appui variable de façon hydraulique, pneumatique ou mécanique pour exercer une pression variable sur une ligne sur la bande individuelle de feuille en matière plastique.

5. Dispositif selon la revendication 1, caractérisé en ce que le cylindre presseur individuel est un rouleau presseur chauffé comprenant un corps métallique et un revêtement en caoutchouc.

6. Dispositif selon la revendication 1, caractérisé en ce que le cylindre presseur individuel est un cylindre métallique poli brillant sans revêtement en caoutchouc.

7. Dispositif selon la revendication 2, caractérisé en ce que le dispositif de chauffage individuel (8, 9, ..., 13...) est un émetteur infrarouge déplaçable le long de la bande de feuille en matière plastique, dont la distance par rapport au tambour (1) est réglable.

8. Dispositif selon la revendication 1, caractérisé en ce qu'après avoir quitté le tambour (1), le stratifié (21) de feuilles parcourt un agencement de refroidissement (22, 23) comprenant un ventilateur (22) et/ou un cylindre de refroidissement (23) à température réglable et/ou un bain de refroidissement.

9. Dispositif selon la revendication 1, caractérisé en ce qu'après avoir quitté la surface du pourtour du tambour de séparation, le stratifié individuel passe sur un agencement de cylindres (28, 29) comprenant des cylindres à température réglable et entraînés, ayant des diamètres différents destinés à l'étirage ultérieur et à une élimination d'une ondulation du stratifié individuel.

10. Dispositif selon la revendication 1, caractérisé en ce qu'après avoir quitté le tambour de séparation (30), le stratifié individuel (31) passe par une surface de contact entre deux rouleaux à estamper d'une station (35) d'estampage.

11. Dispositif selon une ou plusieurs des revendications 1 à 8, caractérisé en ce que le stratifié individuel (31) est guidé selon un trajet en méandres, avec un effort de traction élevé à travers des cylindres (37, 38) à température réglable, qui sont décalés les uns par rapport aux autres en direction verticale et dont les surfaces sont polies brillantes ou structurées et qui sont disposés en aval du tambour de séparation (30).

12. Dispositif selon une ou plusieurs des revendications 1 à 7, caractérisé en ce qu'après avoir quitté le tambour (1), le stratifié (21) de feuilles parcourt à plat un agencement de refroidissement (44) qui comprend un nombre de ventilateurs (41) et/ou de cylindres de refroidissement (42, 43), décalés les uns par rapport aux autres, qui sont en contact de façon alternée avec la face supérieure et inférieure du stratifié (21) de feuilles.

13. Procédé pour la fabrication d'un nombre de stratifiés individuels à deux ou plusieurs couches à partir de feuilles en matière plastique thermoplastique étirées selon un et/ou deux axes et/ou non étirées, qui sont extrudées en commun avec une couche de scellement sur au moins un côté, en utilisant le dispositif selon la revendication 1, par un scellement additionnel en continu de bandes de feuilles en matière plastique individuelles en mouvement sur une première bande de feuille en matière plastique en mouvement par une application de pression et de chaleur pour donner un stratifié de feuilles d'épaisseur finale prédéfinie, dans lequel les bandes de feuilles en matière plastique sont amenées séparément et à distance les unes par rapport aux autres à une surface de tambour pouvant être chauffée et sont appliquées et scellées le long de cette surface les unes sur les autres de telle sorte qu'au moins entre deux bandes de feuille en matière plastique superposées, aucune couche de scellement n'est présente et qu'après le scellement, le stratifié de feuilles est refroidi et est séparé en des stratifiés individuels le long des bandes de feuille en matière plastique qui ne sont pas scellées ensemble.

14. Procédé selon la revendication 13, caractérisé en ce que des bandes de feuilles en matière plastique similaires ou différentes sont scellées les unes avec les autres.

15. Procédé selon la revendication 14, caractérisé en ce que les bandes formées d'une seule feuille du même matériau de polymère, étirées selon un et/ou deux axes ainsi que non étirées, superposées en alternance, sont scellées les unes avec les autres, les bandes de feuilles non étirées présentant par rapport aux bandes de feuilles étirées une température de fusion plus basse.

16. Procédé selon la revendication 14, caractérisé en ce que la température de scellement est maintenue en-dessous de la température de fusion des bandes de feuilles en matière plastique individuelles.

17. Procédé selon la revendication 14 caractérisé en ce qu'avant d'arriver sur la surface courbée chauffée, chaque bande de feuille en matière plastique est chauffée de façon supplémentaire pour commencer à faire fondre les couches de scellement des bandes de feuilles en matière plastique et/ou pour modifier les caractéristiques mécaniques des bandes de feuilles en matière plastique.

18. Procédé selon la revendication 14, caractérisé en ce qu'après avoir quitté la surface courbée, le stratifié de feuille est refroidi par soufflage d'air de refroidissement et/ou par un contact avec des cylindres de refroidissement.

19. Procédé selon la revendication 13, caractérisé en ce qu'au moins un stratifié individuel passe par une presse à deux bandes sans fin.

20. Procédé selon la revendication 13, caractérisé en ce que le stratifié individuel est guidé à travers un agencement de cylindres comportant des cylindres entraînés avec des diamètres différents, qui exercent un effort de traction sur le stratifié individuel pour l'étirer et pour empêcher son ondulation.

21. Procédé selon la revendication 13, caractérisé en ce que le stratifié individuel est estampé d'un seul ou des deux côtés.

22. Procédé selon la revendication 13, caractérisé en ce que comme matériau de départ pour le stratifié de feuilles, en supplément des bandes de feuilles en matière plastique, des bandes réalisées en d'autre matériau que la matière plastique et des stratifiés de telles bandes comprenant des feuilles en matière plastique, sont scellés de façon continue avec des bandes de feuilles en matière plastique.

23. Procédé selon une ou plusieurs des revendications 13 à 22, caractérisé en ce que les étapes de traitement à savoir le refroidissement, l'étirage et l'estampage du stratifié individuel, sont effectuées suivant toutes les combinaisons possibles.

24. Procédé pour la fabrication d'une feuille épaisse à couches multiples à partir de stratifiés individuels, dans lequel au lieu de bandes de feuilles en matière plastique individuelles comme matériau de départ, des stratifiés individuels à couches multiples qui peuvent être fabriqués selon une ou plusieurs des revendications 13 à 23, sont scellés les uns avec les autres et dans lequel la feuille épaisse peut être séparée en des feuilles à plusieurs couches.
